# FASCICULE DE BREVET EUROPEEN

(11) **EP 3 452 307 B1**
(45) Date de publication et mention de la délivrance du brevet: **11.03.2020**
(21) Numéro de dépôt: 17725664.1
(22) Date de dépôt: 25.04.2017
(51) Int. Cl.: B60C 15/02, B60B 25/12, B60C 5/16, B29D 30/48, B60B 21/10, B60B 25/04, B60B 21/12

(54) **ADAPTATEUR POUR ENSEMBLE ROULANT ET ENSEMBLE ROULANT LE COMPRENANT**
ADAPTER FÜR EINE ANORDNUNG MIT RÄDERN UND ANORDNUNG MIT RÄDERN DAMIT
ADAPTER FOR A WHEELED ASSEMBLY AND A WHEELED ASSEMBLY COMPRISING SAME

(30) Priorité: 02.05.2016 FR 1653952
(43) Date de publication de la demande: 13.03.2019
(73) Titulaire: Compagnie Générale des Etablissements Michelin, 63000 Clermont-Ferrand (FR)
(72) Inventeur: BARGUET, Henri, 63040 CLERMONT-FERRAND CEDEX 9 (FR); REIX, Olivier, 63040 CLERMONT-FERRAND CEDEX 9 (FR); TOPIN, Arthur, 63040 CLERMONT-FERRAND CEDEX 9 (FR)
(74) Mandataire: Noel, Luminita
(86) Numéro de dépôt international: PCT/FR2017/050979
(87) Numéro de publication internationale: WO 2017/191389

(56) Documents cités:
- WO-A1-2015/091620
- DE-A1- 2 514 883
- FR-A1- 3 020 313

## Description

L'invention concerne un adaptateur pour ensemble roulant comprenant un pneumatique et une jante, ledit adaptateur étant destiné à assurer la liaison entre le pneumatique et la jante. Il concerne également un ensemble roulant comprenant ledit adaptateur.

Un pneumatique est une structure torique dont l'axe de révolution est l'axe de rotation du pneumatique, comprenant une bande de roulement destinée à entrer en contact avec un sol, deux flancs et deux bourrelets destinés à entrer en contact avec une jante, les deux bourrelets étant reliés à la bande de roulement par les deux flancs.

On rappelle ci-après les définitions utilisées dans la présente invention :
- « direction axiale » : direction parallèle à l'axe de rotation du pneumatique,
- « direction radiale » : direction perpendiculaire à l'axe de rotation du pneumatique,
- « plan radial » : plan qui contient l'axe de rotation du pneumatique et défini par les directions radiale et axiale,
- « direction circonférentielle » : direction perpendiculaire à un plan radial,
- « plan équatorial » : plan perpendiculaire à l'axe de rotation et passant par le milieu de la bande de roulement du pneumatique.

Dans la demande WO2015091618, il est déjà connu d'insérer, entre les bourrelets d'un pneumatique et une jante, un élément de liaison ou adaptateur. Cet adaptateur, constitué de mélanges caoutchouteux renforcés, est déformable élastiquement au moins dans les deux directions radiale et axiale et comprend une extrémité axialement intérieure et une extrémité axialement extérieure. Un tel adaptateur permet de dissocier la partie de l'ensemble roulant pouvant être considérée comme travaillant réellement comme un pneumatique, de la partie de l'ensemble roulant pouvant être considérée comme travaillant comme une jante.

Mais, si un tel ensemble roulant permet au pneumatique d'assurer ses fonctions usuelles, et notamment une réponse en poussée de dérive suivant l'application d'un angle de dérive au pneumatique qui confère ainsi à l'ensemble roulant une flexibilité suffisante pour protéger le pneumatique de toute dégradation, il peut être la cause de l'apparition voire la propagation de fissures dans le renfort extérieur, constituant l'extrémité axialement extérieure, du fait de multiples répétitions de chocs de type « nid de poule ».

En effet, l'adaptateur de l'état de la technique ci-dessus référencé, assurant la liaison de chaque bourrelet du pneumatique avec la jante, n'a pas les caractéristiques mécaniques optimales, principalement en termes de rigidités, permettant d'absorber de grandes déformations lors du passage de l'ensemble roulant dans des nids de poule. Ceci peut entraîner des déformations plastiques résiduelles, voire la rupture, dudit adaptateur, et, par conséquent, l'endommagement de l'ensemble roulant.

De plus, aucune suggestion n'est donnée dans ce document sur des évolutions de conception de l'adaptateur permettant de surmonter les inconvénients précédemment décrits.

Les documents WO 2015/091620 A1 et FR 3020313 A1 décrivent des adaptateurs selon le préambule de la revendication 1.

Aussi les inventeurs se sont donnés comme objectif de proposer un nouvel adaptateur plus résistant aux chocs, et aux fortes sollicitations lors de l'utilisation de l'ensemble roulant sur des routes en mauvais état, tout en diminuant plus la rigidité encore trop élevée de l'extrémité extérieure de l'adaptateur.
L'invention a donc pour objet un adaptateur pour ensemble roulant ayant un axe de rotation (YY'), l'ensemble roulant comprenant :
- un pneumatique ayant deux bourrelets,
- une jante ayant deux rebords de jante,
pour chaque bourrelet, ledit adaptateur assurant la jonction entre le bourrelet et la jante, ledit adaptateur comprenant :
- une extrémité axialement intérieure reliée à la jante,
- une extrémité axialement extérieure comprenant un élément de renfort extérieur et destinée à entrer en contact par une face axialement intérieure, sensiblement radiale, ou face d'appui, avec un bourrelet,
- un corps, connectant l'extrémité axialement extérieure avec l'extrémité axialement intérieure de manière à former une pièce unitaire, comprenant au moins une armature de renforcement principale assurant la liaison entre l'élément de renfort extérieur et l'élément de renfort intérieur, et comprenant un siège d'adaptateur sensiblement axial destiné à entrer en contact avec un bourrelet.

L'adaptateur se caractérise en ce que l'élément de renfort extérieur est en totalité axialement extérieur à la face d'appui, et en ce que l'élément de renfort extérieur est une structure sensiblement annulaire, appelée tringle, de section polygonale, comprenant un fil métallique unitaire de diamètre D1, ledit fil étant enrobé d'une composition élastomère et étant enroulé de manière jointive autour d'un support au moins trois fois selon une direction axiale et au moins deux fois selon une direction radiale.

Le fil est enroulé de manière à former des spires.

Un adaptateur, élément de liaison entre le pneumatique et la jante, permet à un ensemble roulant, en roulage, d'avoir des déformations radiales suffisantes au niveau du bourrelet du pneumatique pour permettre la protection souhaitée vis-à-vis des chocs latéraux.

L'utilisation d'un fil métallique dans l'élément de renfort extérieur présentant un diamètre important, permet de satisfaire la résistance à l'effort de mise en compression lors du gonflage du pneumatique et, par conséquent d'éviter le phénomène de flambement grâce à une meilleure cohésion entre chaque spire de fils.

On rappelle que le phénomène de flambement de la tringle a pour conséquence de générer une perte de pression de l'ensemble monté.

Par ailleurs, le fait d'utiliser un fil métallique totalement enrobé de composition élastomère permet de fortement diminuer le volume d'espaces vides de l'extrémité axialement extérieure, et ainsi de renforcer la résistance sans dommage aux chocs grâce à une augmentation de la rigidité, en comparaison à l'utilisation d'un fil partiellement enrobé d'élastomère. Cette augmentation de rigidité s'explique par le fait que la structure de l'élément de renfort extérieur présente un degré de cohésion plus important.

En outre, du fait de sa stabilité le renfort extérieur selon l'invention permet d'obtenir, une légère ovalisation de l'extrémité extérieure de l'adaptateur, optimisant ainsi le fonctionnement du pneumatique lors du roulage.

L'extrémité axialement extérieure de l'adaptateur délimite axialement une portion du corps d'adaptateur, appelé siège d'adaptateur, et destinée à recevoir un bourrelet de pneumatique. Le siège d'adaptateur assure la même fonction qu'un siège de jante, qui est la portion sensiblement axiale d'un rebord de jante. Selon la direction axiale, la face d'appui de l'extrémité axialement extérieure sert d'appui au bourrelet du pneumatique à l'instar d'un crochet de jante, qui est la portion sensiblement radiale d'un rebord de jante. Le pneumatique est alors immobilisé axialement par la pression de gonflage, et est plaqué contre la face d'appui de cette extrémité axialement extérieure, comme dans le cas usuel d'un bourrelet de pneumatique appliqué contre un crochet de jante.

L'extrémité axialement intérieure de l'adaptateur pourrait être dénommée « bourrelet d'adaptateur » puisqu'elle peut être destinée à accrocher l'adaptateur sur le rebord d'une jante, comme dans le cas usuel d'un bourrelet de pneumatique appuyé sur un rebord de jante.

De préférence, l'extrémité axialement intérieure est lié à un bord de jante, tel qu'un crochet de jante par tout moyen de fixation, tel que par la technique classique de serrage, de collage, de sertissage, de vissage, avec une ou plusieurs gorges de centrage avec ou sans renforcement pour serrage sur un crochet de jante.

Ainsi, au cours de son usage, le pneumatique est pratiquement immobilisé axialement par rapport à la jante. Plus précisément les bourrelets du pneumatique sont immobilisés axialement par rapport à la jante, comme pour un ensemble roulant classique dans lequel les bourrelets du pneumatique sont montés directement sur les rebords de jante. En revanche, les bourrelets du pneumatique ne sont pas immobilisés radialement par rapport à la jante. Plus précisément les bourrelets du pneumatique ont une possibilité de déplacement radial par rapport à la jante. En roulage standard, la déformation radiale de l'adaptateur est négligeable. En revanche, lors d'un choc, la déformation radiale de l'adaptateur peut être importante, ce qui contribue à réduire les efforts mécaniques sur l'ensemble roulant.

De préférence, l'extrémité axialement intérieure comprend un élément de renfort intérieur destiné à être monté sur un rebord de jante.

De préférence, la composition élastomère enrobant le fil unitaire présente une épaisseur moyenne comprise entre 0.05 mm et 03 mm.

Cette composition élastomère peut être choisie parmi les compositions élastomères classiquement utilisées dans le domaine du pneumatique.

De préférence, le diamètre D1 du fil unitaire est compris entre 0.5 mm et 5mm. De préférence, le fil est enroulé entre 3 et 10 fois selon la direction axiale, et entre 2 et 9 fois selon la direction radiale.

L'enroulement du fil sous forme de spires jointives et selon différentes couches selon la direction radiale aboutit à une structure similaire à celle de nappes imbriquées les unes dans les autres sous la forme de couches. Un tel enroulement selon les directions axiale et radiale permet d'ajuster la hauteur radiale et la largeur axiale des couches successives.

L'enroulement du fil selon différentes couches peut être défini par la relation suivante : ∑Nᵢ x D_{fil} Où D_{fil} représente le diamètre du fil utilisé, et Nᵢ le nombre de fils de la couche d'indice « i ».

Le fil est enrobé d'une composition élastomère garantissant la cohésion du renfort selon l'invention par la limitation des déplacements possibles entre les fils après vulcanisation. Le fil utilisé est de préférence en acier.

De préférence, le fil utilisé est caractérisé par sa résistance Rm comprise entre 1000 et 3000MPa, et de préférence comprise entre 1400 et 2800MPa, et la nature de son revêtement choisi parmi le zinc, el laiton ou le bronze.

De préférence, l'adaptateur peut comprendre un ensemble unique comprenant deux extrémités axialement extérieures disposées de part et d'autre du disque de jante. Il peut également être constitué de deux parties indépendantes, disposées sur chaque crochet de jante à l'aide de chaque extrémité axialement intérieure.

L'invention est décrite à l'aide des figures 1 à 3 suivantes, schématiques et non nécessairement à l'échelle:
- figure 1 : coupe radiale d'un adaptateur non monté, selon une première variante de l'invention,
- figure 2 : coupe radiale d'un adaptateur non monté, selon une seconde variante de l'invention,
- figure 3 : coupe radiale d'un adaptateur non monté, selon une troisième variante de l'invention,
- figure 4 : coupe radiale d'un adaptateur non monté, selon une quatrième variante de l'invention,
- figure 5 : coupe radiale d'un adaptateur non monté, selon une cinquième variante de l'invention,
- figure 6 : coupe radiale d'un ensemble roulant, comprenant deux adaptateurs.

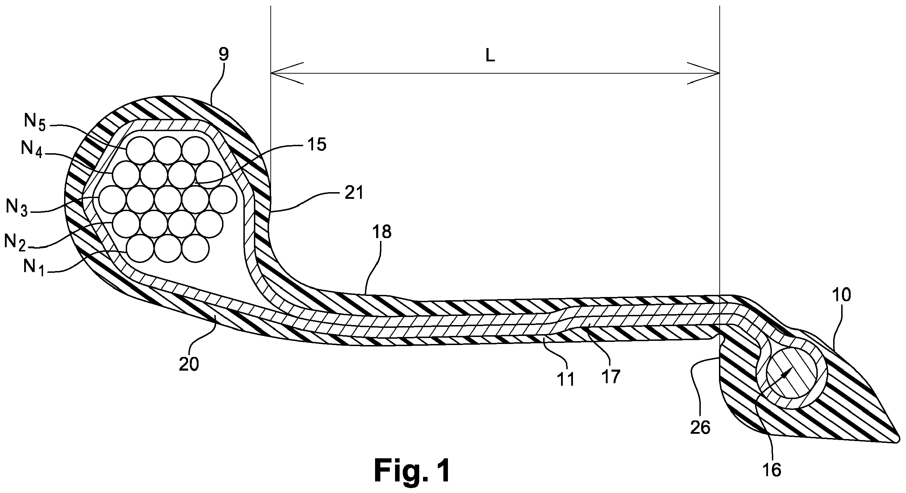

La figure 1 représente un adaptateur non monté sur jante, selon une première variante de l'invention. Cet adaptateur comprend une extrémité axialement extérieure 9 comprenant un élément de renfort extérieur 15, une extrémité axialement intérieure 10 comprenant un élément de renfort intérieur 16, et un corps 11 comprenant une armature de renforcement principale 17. L'armature de renforcement principale 17 est constituée par une seule couche de renforcement qui s'enroule respectivement autour de l'élément de renfort intérieur 16 de l'extrémité axialement intérieure 10 et autour de l'élément de renfort extérieur 15 de l'extrémité axialement extérieure 9. Au niveau du corps 11, les portions aller et retour de ladite couche de renforcement constitue ainsi un empilement sensiblement radial d'au moins deux couches de renforcement. L'armature de renforcement principale 17 est enveloppée par une couche de matériau élastomérique 20. Le corps 11 comprend en outre un siège d'adaptateur 18 destiné à entrer en contact avec un bourrelet de pneumatique. Le corps 11 a une largeur axiale L, mesurée entre la face axialement intérieure 21 de l'extrémité axialement extérieure 9 et la face axialement extérieure 26 de l'extrémité axialement intérieure 10. Dans ce premier mode de réalisation de l'invention.

Sur la figure 1, l'élément de renfort extérieur 15 est une structure annulaire, appelée tringle, étant constituée par une construction de type (3 + 4 + 5 + 4 + 3). Chaque chiffre représente le nombre de tours de fil sur une couche. La première couche N1 est disposée sur la partie radialement la plus intérieure. Les couches N2 à N5 se situent progressivement sur les couches radialement plus extérieures. Ainsi dans cet exemple, la couche N1 comprend 3 tours de fils, la couche N2 4 tours, la couche N3 5 tours, la couche N4 4 tours et la couche N5 3 tours. La première couche de fil est enroulée autour d'un support sensiblement circulaire.

Le fil utilisé est un fil en acier de diamètre 2,15mm totalement enrobé d'une couche sensiblement uniforme de composition élastomère d'environ 0,14mm.

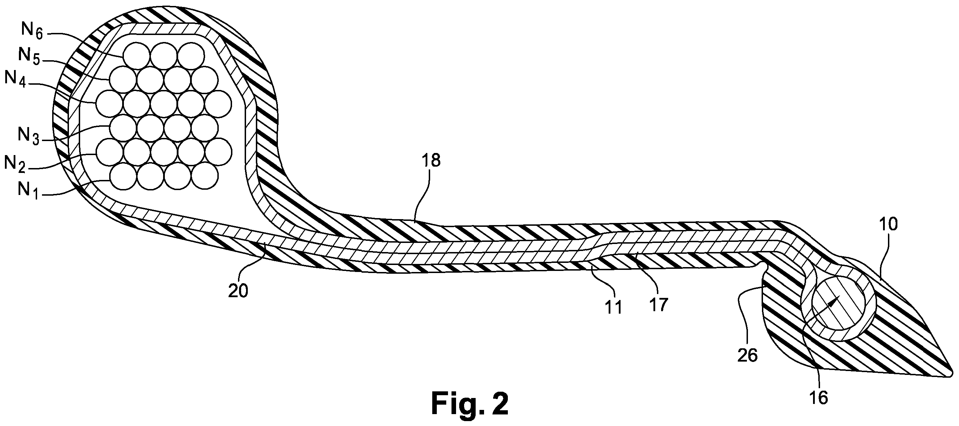

La figure 2 diffère de la figure 1 par une construction de l'enroulage de fil différente. Sur cette figure, 6 couches successives de fils sont disposées selon la direction radiale. La première couche N1 comprend 4 tours de fil, la couche N2 5 tours de fil, la couche N3 4 tours de fil, la couche N4 5 tours de fil, la couche N5 4 tours de fil et la couche N6 3 tours de fil.

Le fil utilisé est un fil en acier de diamètre 2,00mm totalement enrobé d'une couche sensiblement uniforme de composition élastomère d'environ 0,14mm.

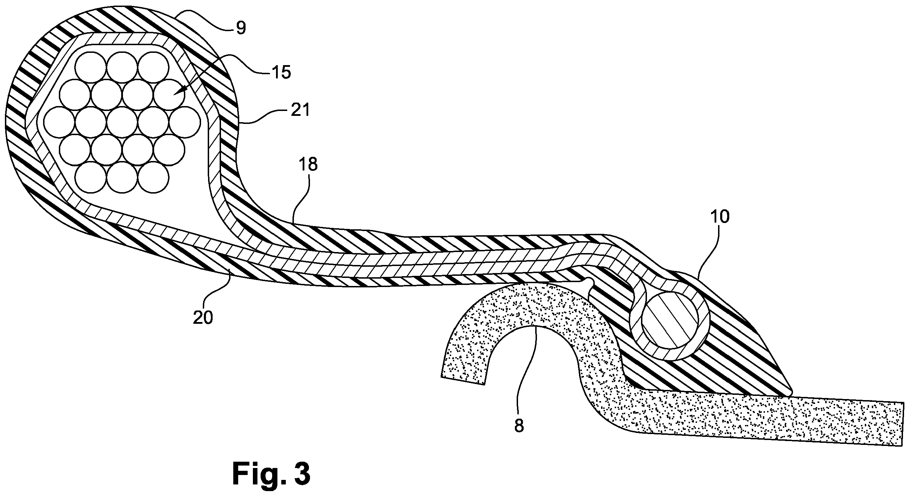

La figure 3 diffère des figures 1 et 2 par le fait que l'extrémité axialement intérieure 10 est maintenue sur le rebord de jante 8 par un simple accrochage de type connu, lorsque le pneumatique est mis sous pression.

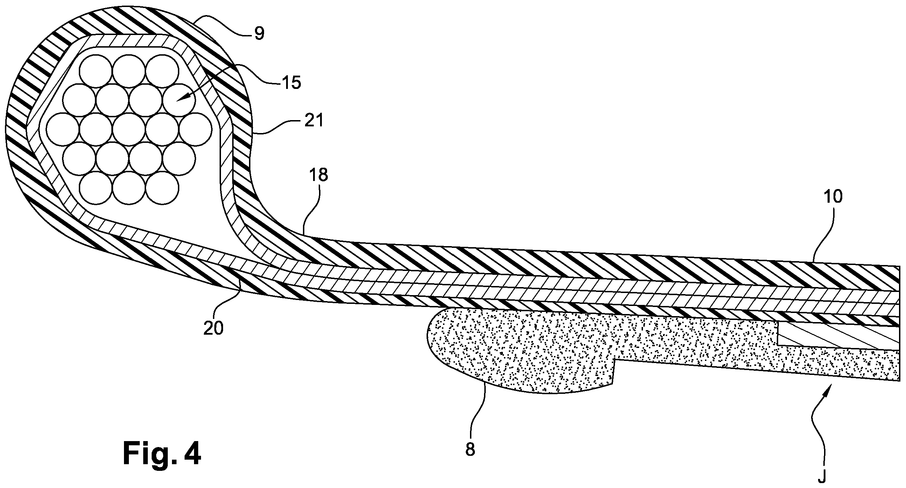

La figure 4 représente une fixation de l'adaptateur par collage de l'extrémité axialement intérieure 10 sur le rebord de jante 8.

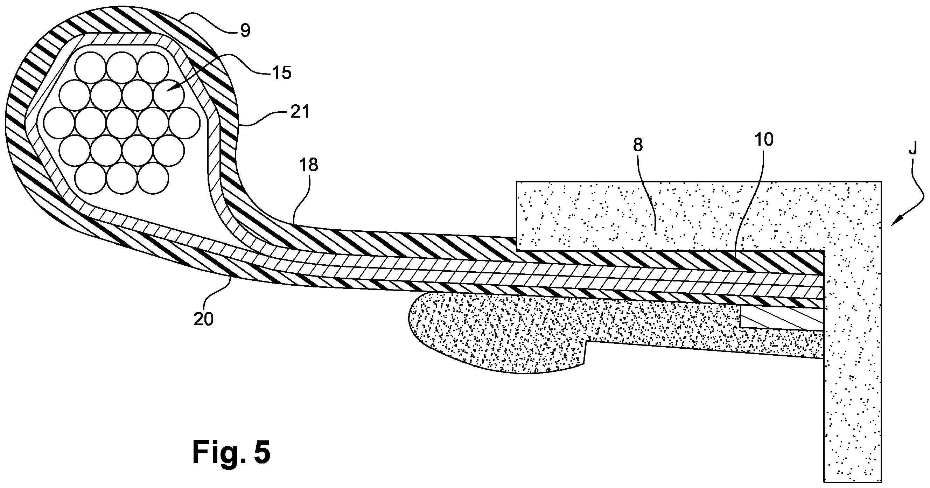

La figure 5 représente une fixation de l'adaptateur par sertissage de l'extrémité intérieure 10 dans le rebord de jante 8.

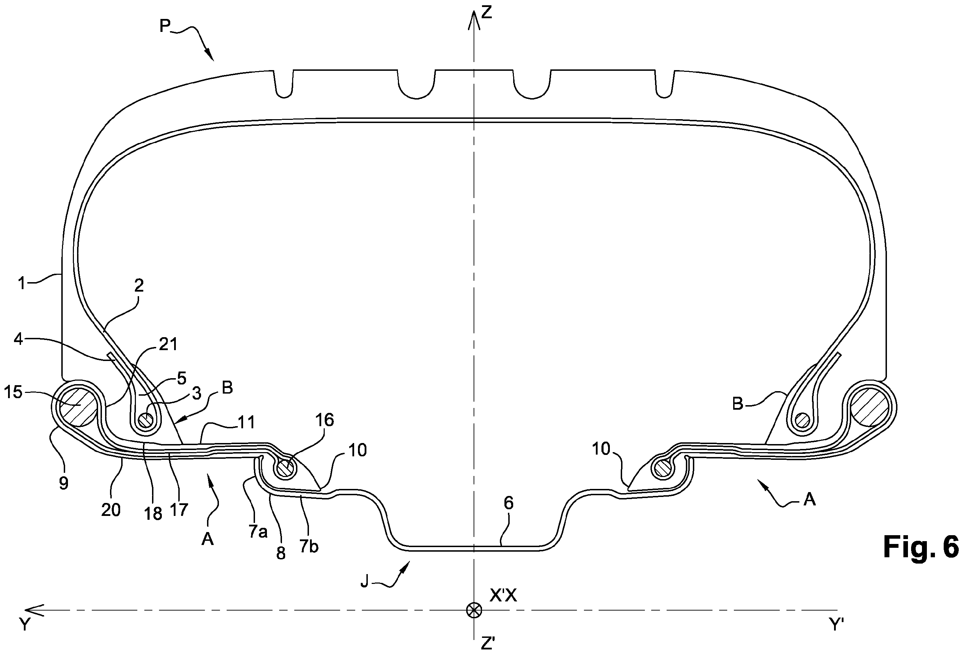

La figure 6 présente une coupe radiale, dans un plan YZ, d'un ensemble roulant comprenant un pneumatique P, une jante J et, pour chaque bourrelet B, un adaptateur A assurant la jonction entre le bourrelet B et la jante J. Le pneumatique P comprend une bande de roulement (non référencée) prolongée radialement vers l'intérieur par deux flancs 1, eux-mêmes prolongés radialement vers l'intérieur par deux bourrelets B. Dans chaque bourrelet B, l'armature de carcasse 2 s'enroule autour d'un élément de renforcement circonférentiel ou tringle 3, pour former un retournement 4 séparé de l'armature de carcasse 2 par un élément de remplissage 5. La jante J comprend, dans une portion médiane, une gorge de montage 6, destinée à faciliter le montage des bourrelets B du pneumatique P, et, à ses extrémités axiales, deux rebords de jante 8 comprenant chacun une portion sensiblement radiale ou crochet de jante 7a et une portion sensiblement axiale ou siège de jante 7b. L'adaptateur A comprend une extrémité axialement intérieure 10 comprenant un élément de renfort intérieur 16 et destinée à être montée sur un rebord de jante 8, une extrémité axialement extérieure 9 comprenant un élément de renfort extérieur 15 et destinée à entrer en contact par une face axialement intérieure, sensiblement radiale, ou face d'appui 21, avec un bourrelet B, et enfin un corps 11, connectant l'extrémité axialement extérieure 9 avec l'extrémité axialement intérieure 10 de manière à former une pièce unitaire, comprenant au moins une armature de renforcement principale 17 assurant la liaison entre l'élément de renfort extérieur 15 et l'élément de renfort intérieur 16, et comprenant un siège d'adaptateur 18 sensiblement axial destiné à entrer en contact avec un bourrelet B.

### Exemple 1 : Test de compression

Dans cet exemple, l'adaptateur est monté entre un pneumatique de dimension 245/40 R 18 et une jante de dimension 6B17. L'extrémité intérieure de l'adaptateur présente une dimension de 17" et l'extrémité extérieure de 18".

Le tableau I ci-dessous rassemble les résultats de mesure de pression d'épreuve d'une même dimension de pneumatique monté sur des adaptateurs différentiés par le nombre et le diamètre de fil qui constitue le renfort extérieur.

L'expérience montre que la pression de gonflage du pneumatique sollicite le renfort extérieur en compression d'anneau en regard de la déformation subie par les renforts testés.

**Tableau I**

| **Adaptateur** | **Pression d'épreuve (bars)** |
|---|---|
| Adaptateur 1 - 19 tours de fil de 1,7mm de diamètre enrobé d'une gaine de 0,14mm d'élastomère | Supérieur à 12 |
| Adaptateur 2 - 19 tours de fil de 2mm de diamètre enrobé d'une gaine de 0,14mm d'élastomère | Supérieur à 17 |
| Adaptateur 3 - 19 tours de fil de 2,15mm de diamètre enrobé d'une gaine de 0,14mm d'élastomère | Supérieur à 22 |
| Adaptateur 4 - 25 tours de fil de 2mm de diamètre enrobé d'une gaine de 0,14mm d'élastomère | Supérieur à 23 |

De ce tableau, on peut constater que l'augmentation du diamètre du fil, et par conséquent de sa section unitaire permet d'augmenter de façon efficace la pression d'épreuve (adaptateurs 2 et 4 - augmentation de 15%) en comparaison à une augmentation du nombre de fils (adaptateurs 2 et 4 - augmentation de 32%) en comparaison à des augmentations de l'encombrement ou de la asse du renfort extérieur qui correspondent respectivement à 15% (adaptateur 3) et 32% (adaptateur 4).

## Revendications

1. Adaptateur (A) pour ensemble roulant ayant un axe de rotation (YY'),
l'ensemble roulant comprenant :
- un pneumatique (P) ayant deux bourrelets (B),
- une jante (J) ayant deux rebords de jante (8),
- pour chaque bourrelet (B), ledit adaptateur (A) assurant la jonction entre le bourrelet (B) et la jante (J),
ledit adaptateur (A) comprenant :
- une extrémité axialement intérieure (10) reliée à la jante (J),
- une extrémité axialement extérieure (9) comprenant un élément de renfort extérieur (15) et destinée à entrer en contact par une face axialement intérieure, sensiblement radiale, ou face d'appui (21), avec un bourrelet (B), l'élément de renfort extérieur (15) étant en totalité axialement extérieur à la face d'appui (21) une fois l'ensemble monté,
- un corps (11), connectant l'extrémité axialement extérieure (9) avec l'extrémité axialement intérieure (10), comprenant au moins une armature de renforcement principale (17) assurant la liaison entre l'élément de renfort extérieur (15) et d'un élément de renfort intérieur (16), et comprenant un siège d'adaptateur (18) sensiblement axial destiné à entrer en contact avec un bourrelet (B),
**caractérisé en ce que** l'élément de renfort extérieur (15) est une structure sensiblement annulaire, appelée tringle, de section sensiblement polygonale, comprenant un fil métallique unitaire de diamètre D1, ledit fil étant enrobé d'une composition élastomère et étant enroulé de manière jointive autour d'un support au moins trois fois selon une direction axiale et au moins deux fois selon une direction radiale.

2. Adaptateur selon la revendication 1, **dans lequel** l'extrémité axialement intérieure (10) comprend un élément de renfort intérieur (16) destiné à être monté sur un rebord de jante (8).

3. Adaptateur selon la revendication 1, **dans lequel** la composition élastomère enrobant le fil unitaire présente une épaisseur moyenne comprise entre 0.05 mm et 0.3 mm.

4. Adaptateur selon la revendication 1, **dans lequel** le diamètre D1 du fil unitaire est compris entre 0.5 mm et 5mm.

5. Adaptateur selon la revendication 1, **dans lequel** le fil est enroulé entre 3 et 10 fois selon la direction axiale.

6. Adaptateur selon la revendication 1, **dans lequel** le fil est enroulé entre 2 et 9 fois selon la direction radiale.

7. Ensemble roulant **caractérisé en ce qu'**il comprend l'adaptateur selon l'une des revendications précédentes.

## Patentansprüche

1. Adapter (A) für eine Fahreinheit, die eine Drehachse (YY') hat, wobei die Fahreinheit enthält:
- einen Luftreifen (P) mit zwei Wülsten (B),
- eine Felge (J) mit zwei Felgenhörnern (8),
- wobei der Adapter (A) für jeden Wulst (B) die Verbindung zwischen dem Wulst (B) und der Felge (J) gewährleistet,
wobei der Adapter (A) enthält:
- ein mit der Felge (J) verbundenes axial inneres Ende (10),
- ein axial äußeres Ende (9), das ein äußeres Verstärkungselement (15) enthält und dazu bestimmt ist, über eine axial innere, im Wesentlichen radiale Seite oder Auflageseite (21) mit einem Wulst (B) in Kontakt zu kommen, wobei das äußere Verstärkungselement (15) insgesamt axial außerhalb der Auflageseite (21) ist, wenn die Einheit montiert ist,
- einen Körper (11), der das axial äußere Ende (9) mit dem axial inneren Ende (10) verbindet, der mindestens eine Hauptverstärkungsbewehrung (17) enthält, die die Verbindung zwischen dem äußeren Verstärkungselement (15) und einem inneren Verstärkungselement (16) gewährleistet, und einen im Wesentlichen axialen Adaptersitz (18) enthält, der dazu bestimmt ist, mit einem Wulst (B) in Kontakt zu kommen,
**dadurch gekennzeichnet, dass** das äußere Verstärkungselement (15) eine im Wissentlichen ringförmige Struktur, Wulstkern genannt, mit im Wesentlichen polygonalem Querschnitt ist, die einen einzelnen Metalldraht mit einem Durchmesser D1 enthält, wobei der Draht mit einer Elastomerzusammensetzung umhüllt ist und anliegend um einen Träger mindestens dreimal gemäß einer axialen Richtung und mindestens zweimal gemäß einer radialen Richtung gewickelt ist.

2. Adapter nach Anspruch 1, wobei das axial innere Ende (10) ein inneres Verstärkungselement (16) enthält, das dazu bestimmt ist, auf ein Felgenhorn (8) montiert zu werden.

3. Adapter nach Anspruch 1, wobei die den Einzeldraht umhüllende Elastomerzusammensetzung eine mittlere Dicke zwischen 0,05 mm und 0,3 mm aufweist.

4. Adapter nach Anspruch 1, wobei der Durchmesser D1 des Einzeldrahts zwischen 0,5 mm und 5 mm liegt.

5. Adapter nach Anspruch 1, wobei der Draht zwischen 3 und 10 Mal gemäß der axialen Richtung gewickelt ist.

6. Adapter nach Anspruch 1, wobei der Draht zwischen 2 und 9 Mal gemäß der radialen Richtung gewickelt ist.

7. Fahreinheit, **dadurch gekennzeichnet, dass** sie den Adapter nach einem der vorhergehenden Ansprüche enthält.

## Claims

1. Adapter (A) for a rolling assembly having an axis of rotation (YY'),
the rolling assembly comprising:
- a tyre (P) having two beads (B),
- a rim (J) having two rim bead seats (8),
- for each bead (B), the said adapter (A) providing the connection between the bead (B) and the rim (J),
the said adapter (A) comprising:
- an axially inner end (10) connected to the rim (J),
- an axially outer end (9) comprising an outer reinforcing element (15) and intended to come into contact, via a substantially radial axially inner face, or bearing face (21), with a bead (B), the outer reinforcing element (15) being completely axially on the outside of the bearing face (21) once assembled,
- a body (11) connecting the axially outer end (9) to the axially inner end (10), comprising at least one main reinforcement (17) providing the connection between the outer reinforcing element (15) and the inner reinforcing element (16), and comprising a substantially axial adapter seat (18) intended to come into contact with a bead (B),
**characterized in that** the outer reinforcing element (15) is a substantially annular structure, referred to as a bead wire, of substantially polygonal section, comprising an individual metal wire of diameter D1, the said wire being coated in an elastomer composition and wound contiguously around a support at least three times in an axial direction and at least twice in a radial direction.

2. Adapter according to Claim 1, **in which** the axially inner end (10) comprises an inner reinforcing element (16) intended to be mounted on a rim bead seat (8).

3. Adapter according to Claim 1, **in which** the elastomer composition coating the individual wire has a mean thickness comprised between 0.05mm and 0.3mm.

4. Adapter according to Claim 1, **in which** the diameter D1 of the individual wire is comprised between 0.5mm and 5mm.

5. Adapter according to Claim 1, **in which** the wire is wound between 3 and 10 times in the axial direction.

6. Adapter according to Claim 1, **in which** the wire is wound between 2 and 9 times in the radial direction.

7. Rolling assembly, **characterized in that** it comprises the adapter according to one of the preceding claims.
